# EUROPÄISCHE PATENTANMELDUNG

(11) **EP 3 961 530 A1**
(43) Veröffentlichungstag der Anmeldung: **02.03.2022**
(21) Anmeldenummer: 21181166.6
(22) Anmeldetag: 23.06.2021
(51) Int. Cl.: G06Q 10/06, G06Q 30/02, G06Q 50/02

(54) **VERFAHREN ZUM GENERIEREN VON AUF EINEN LANDWIRTSCHAFTLICHEN PROZESS BEZOGENEN DATEN**

(30) Priorität: 27.08.2020 DE 102020122385
(71) Anmelder: 365FarmNet Group KGaA mbh & Co KG, 33428 Harsewinkel (DE)
(72) Erfinder: Grundmann, Marten, 10829 Berlin (DE)
(74) Vertreter: CLAAS Gruppe

(57) **Zusammenfassung**

Die vorliegende Erfindung betrifft ein Verfahren zum Generieren von auf einen landwirtschaftlichen Prozess bezogenen Daten mittels einer Serverplattform (1), wobei die Serverplattform (1) ein Eingabetool (5) aufweist, durch welches Benutzer (4) eine prozessbezogene landwirtschaftliche Eingaberoutine (6) zur Eingabe von Prozessparametern (7) zur Dokumentation und/oder Planung durchführen,
wobei die Serverplattform (1) mittels eines Analysetools (12) die eingegebenen Prozessparameter (7) anonymisiert und als anonymisierte Prozessparameter (11a) in einer Datenbank (13) abrufbar hinterlegt,
wobei die Serverplattform (1) ein Empfangstool (15) zur Eingabe eines landwirtschaftlichen Fragenkatalogs (16) mit diesem zugeordneten Auswahlkriterien (17) durch einen Auftraggeber (20) aufweist, wobei der landwirtschaftliche Fragenkatalog (16) an auszuwählende Benutzer (4) der Serverplattform (1) gerichtet wird,
wobei die Serverplattform (1) mittels des Analysetools (12) in Abhängigkeit von den Auswahlkriterien (17) und von in einem Datenspeicher (18) der Serverplattform (1) hinterlegbaren Filterkriterien (19) die Benutzer (4) automatisch auswählt, an die der landwirtschaftliche Fragenkatalog (16) übermittelt wird,
wobei die Serverplattform (1) mittels des Eingabetools (5) den ausgewählten Benutzern (4) zumindest eine Frage (22) des Fragenkatalogs (16) in der Eingaberoutine (6) zur Beantwortung vorgibt.

## Beschreibung

Die vorliegende Erfindung betrifft ein Verfahren zum Generieren von auf einen landwirtschaftlichen Prozess bezogenen Daten mittels einer Serverplattform gemäß dem Anspruch 1 sowie eine Serverplattform als solche gemäß dem Anspruch 14.

Das datengestützte Optimieren von landwirtschaftliche Prozesse findet eine zunehmende Akzeptanz und Verbreitung in der Land- und Viehwirtschaft. Hierzu werden mittels eines Verwaltungssystems landwirtschaftliche Prozesse dokumentiert und/oder die Durchführung eines landwirtschaftlichen Prozesses geplant. Dabei bilden Prozessparameter, die im Rahmen der Dokumentation von durchgeführten landwirtschaftlichen Prozessen in dem Verwaltungssystem von zumindest einem Benutzer, wie dem Landwirt, hinterlegt werden, Teil einer Datenbasis für die darauffolgende Planung von durchzuführenden landwirtschaftlichen Prozessen. Derartige Verwaltungssysteme werden auf Serverplattformen bereitgestellt.

Die in dem Verwaltungssystem von den Benutzern hinterlegten Prozessparameter sind auf der anderen Seite für Hersteller und/oder Lieferanten von landwirtschaftlichen Ressourcen, die bei der Durchführung landwirtschaftlicher Prozesse zur Anwendung kommen, ebenfalls von besonderer Bedeutung. Anhand der Dokumentation und Planung können Hersteller und/oder Lieferanten ersehen, welche Ressourcen in welchem Umfang zum Einsatz kamen oder kommen werden. Jedoch stehen dem Hersteller und/oder dem Lieferanten einer spezifischen landwirtschaftlichen Ressource im Allgemeinen keine zeitnah erhobenen Informationen darüber zur Verfügung, welche Motivation der Benutzer, insbesondere der Landwirt, für den Einsatz einer spezifischen landwirtschaftlichen Ressource hatte.

Der Standard zur Erhebung von Informationen darüber, welche Motivation bei einem Benutzer zugrunde liegt, sind Umfragen durch damit beauftragte Marktforschungsinstitute. Diese sammeln, zumeist am Ende einer landwirtschaftlichen Periode, Daten von Landwirten. Zu diesem Zeitpunkt sind dem Landwirt jedoch nicht mehr alle relevanten Faktoren bekannt und die Ungenauigkeit der gesammelten Daten steigt. Hinzu kommt, dass diese Daten wegen fehlender zeitlicher Nähe nicht aktuell sind. Es ist also kaum möglich, aktuelle relevante und hochqualitative Daten präzise zu sammeln.

Der Erfindung liegt das Problem zugrunde, ein Verfahren zum Generieren von auf einen landwirtschaftlichen Prozess bezogenen Daten derart auszugestalten und weiterzubilden, dass es den Praxisanforderungen im landwirtschaftlichen Bereich besser gerecht wird. Das vorstehend genannte Problem wird durch die Merkmale von Anspruch 1 gelöst.

Wesentlich ist die grundsätzliche Überlegung, dass Prozessparameter zu den relevanten landwirtschaftlichen Prozessen heutzutage bereits digitalisiert werden. Diese Digitalisierung geschieht zumeist kurz nach oder sogar während der Ausführung des landwirtschaftlichen Prozesses. Zum Teil geschieht die Digitalisierung, in Form einer Planung, entsprechend vor Durchführung des landwirtschaftlichen Prozesses. Genau diese Digitalisierung kann nun genutzt werden, um nebenbei aktuelle und hochrelevante weitere Daten zu sammeln. Hierzu werden unter Einhaltung der Anonymität der Benutzer, ausgehend von den im Verwaltungssystem hinterlegten Prozessdaten der Benutzer, automatische Ad hoc-Befragungen durchgeführt, um zu ermitteln, warum bestimmte Maßnahmen im Kontext mit einem landwirtschaftlichen Prozess durchgeführt wurden.

Im Einzelnen wird gemäß dem Anspruch 1 ein Verfahren zum Generieren von auf einen landwirtschaftlichen Prozess bezogenen Daten mittels einer Serverplattform vorgeschlagen, wobei die Serverplattform ein Eingabetool aufweist, durch welches Benutzer eine prozessbezogene landwirtschaftliche Eingaberoutine zur Eingabe von Prozessparametern zur Dokumentation und/oder Planung durchführen, wobei die Serverplattform mittels eines Analysetools die eingegebenen Prozessparameter anonymisiert und als anonymisierte Prozessparameter in einer Datenbank abrufbar hinterlegt, wobei die Serverplattform ein Empfangstool zur Eingabe eines landwirtschaftlichen Fragenkatalogs mit diesem zugeordneten Auswahlkriterien durch einen Auftraggeber aufweist, wobei der landwirtschaftliche Fragenkatalog an auszuwählende Benutzer der Serverplattform gerichtet wird, wobei die Serverplattform mittels des Analysetools in Abhängigkeit von den Auswahlkriterien und von in einem Datenspeicher der Serverplattform hinterlegbaren Filterkriterien die Benutzer automatisch auswählt, an die der landwirtschaftliche Fragenkatalog übermittelt wird, wobei die Serverplattform mittels des Eingabetools den ausgewählten Benutzern zumindest eine Frage des Fragenkatalogs in der Eingaberoutine zur Beantwortung vorgibt. Die Aufraggeber können ausgehend von den generierten Daten unter Benutzern der Serverplattform automatische ad-Hoc-Befragungen, unter Einhaltung der Anonymität der zur Befragung ausgewählten Benutzer, durchführen, um zu ermitteln, warum beispielsweise bestimmte Maßnahmen durchgeführt wurden.

Der Begriff "Generieren von auf einen landwirtschaftlichen Prozess bezogenen Daten" umfasst zumindest das Erheben, Sammeln und Verarbeitender Daten. Die Eingaberoutine ist insbesondere eine Dokumentationsroutine zur Dokumentation eines landwirtschaftlichen Prozesses oder eine Planungsroutine zur Planung eines landwirtschaftlichen Prozesses durch den Benutzer. In der Dokumentationsroutine kann der Benutzer beispielsweise dokumentieren, welchen Dünger dieser wann auf welchem Feld ausgebracht hat. Grundsätzlich bietet die Dokumentationsroutine dem jeweiligen Benutzer die Möglichkeit, durchgeführte Maßnahmen von der Vorbereitung eines Schlages über die Aussaat und die sich daran anschließenden Maßnahmen, wie Pflanzenschutz und Düngung, sowie die Ernte sowohl zeitlich referenziert als auch georeferenziert zu dokumentieren. Grundsätzlich kann die Dokumentationsroutine auch in einen anwendungsgetriebenen Prozess integriert sein und daher Eingaben während der Abarbeitung eines landwirtschaftlichen Prozesses betreffen.

Insbesondere können die anonymisierten Prozessparameter und die Auswahlkriterien und/oder die Filterkriterien in einer Vergleichsroutine auf eine Übereinstimmung überprüft werden. Dadurch kann die Genauigkeit der Auswahl eines Benutzers erhöht werden. Die Vergleichsroutine kann vorzugsweise durch das Analysetool vorgenommen werden. Diese Übereinstimmung kann auf unterschiedliche Art und Weise definiert sein. Es kann beispielsweise eine prozentuale Übereinstimmung zwischen den Auswahlkriterien und/oder die Filterkriterien und den Prozessparametern ausreichen, es kann jedoch auch vorgesehen sein, dass gewisse Auswahlkriterien und/oder die Filterkriterien zwingend erfüllt sein müssen. Es kann auch vorgesehen sein, dass ein Grad der Übereinstimmung ermittelt wird, der in die Auswahl mit einfließt.

Bevorzugt können die anonymisierten Prozessparameter und/oder die Auswahlkriterien die Nutzung sowie den Einsatzort landwirtschaftlicher Ressourcen, wie einer landwirtschaftlichen Arbeitsmaschine und/oder eines landwirtschaftlichen Arbeitsaggregates und/oder die Nutzung, insbesondere den Verbrauch, eines landwirtschaftlichen Arbeitsmittels, insbesondere eines Düngemittels und/oder eines Pflanzenschutzmittels und/oder eines Futtermittels und/oder eines Saatguts, oder eines Betriebsmittels betreffen. So können Prozessparameter von eingesetzten Arbeitsmaschinen und/oder Arbeitsaggregaten mittels der Dokumentationsroutine erfasst werden. Die Erfassung kann manuell durch eine Eingabe durch den Benutzer oder automatisch mittels geeigneter Sensorvorrichtungen der eingesetzten Arbeitsmaschine und/oder des Arbeitsaggregates erfolgen. Prozessparameter können beispielsweise Art und Hersteller der eingesetzten Arbeitsmaschine und/oder des Arbeitsaggregates sein, der Verbrauch an Betriebsmitteln und/oder Hilfsmitteln, Einsatzdauer und Einsatzort und dergleichen mehr. Insbesondere Verbrauchsdaten sowie Lokalisationsdaten lassen sich vorzugsweise durch die eingesetzte Arbeitsmaschine und/oder das Arbeitsaggregates mittels geeigneter Sensorvorrichtungen automatisiert bestimmen, die der eingesetzten Arbeitsmaschine und/oder dem Arbeitsaggregat zugeordnet und/oder an diesen angeordnet sind. Diese Prozessparameter können durch eine Steuerungsvorrichtung der eingesetzten Arbeitsmaschine und/oder des Arbeitsaggregates automatisch an die Serverplattform zur Verarbeitung durch die Dokumentationsroutine übermittelt werden.

Des Weiteren können in dem Datenspeicher hinterlegbare Filterkriterien aus benutzerspezifischen Informationen abgeleitet werden, die durch das Analysetool aus Quantität und/oder Qualität und/oder der zeitlichen Nähe der Eingabe von Prozessparametern zur Dokumentation und/oder Planung bestimmt werden. Filterkriterien können insbesondere spezifische Eigenschaften der Benutzer betreffen, die von den Auswahlkriterien abweichen bzw. unabhängig sind. Diese sind auf der Serverplattform anonymisiert hinterlegt.

Hierzu können in dem Datenspeicher hinterlegbare Filterkriterien aus einer in dem Datenspeicher und/oder der Datenbank hinterlegten Befragungshistorie der die Serverplattform verwendenden Benutzer abgeleitet werden. Dabei kann die benutzerspezifische hinterlegte Befragungshistorie Informationen über die Häufigkeit von in der Vergangenheit durchgeführten Befragungen, über den zeitlichen Abstand zwischen einzelnen durchgeführten Befragungen, über die Neigung der Benutzer an einer Befragung teilzunehmen umfassen. Des Weiteren kann die Befragungshistorie als Filterkriterien verwendbare Qualitätskriterien umfassen. Hierbei können Qualitätskriterien die Vollständigkeit sowie die zeitliche Nähe der Dokumentation von landwirtschaftlichen Prozessen durch den jeweiligen Benutzer sein. Weiterhin können Qualitätskriterien der Umfang und die zeitliche Nähe bei der Eingabe von Prozessparametern zur Planung landwirtschaftlicher Prozesse sein.

Gemäß einer bevorzugten Ausführung kann die Serverplattform mittels des Eingabetools ein zur Verfügung stehendes Zeitfenster zur Beantwortung des Fragenkataloges in der Eingaberoutine vorgeben und signalisieren. Den automatisch ausgewählten Benutzern kann durch das Signalisieren des zur Verfügung stehenden Zeitfensters eine Dringlichkeit der Beantwortung suggeriert werden, um Einfluss auf den Entscheidungsprozess der Teilnahme an sich und der zeitnahen Beantwortung durch den jeweiligen ausgewählten Benutzer zu nehmen. Dabei kann dem jeweils automatisch ausgewählten Benutzer durch das Eingabetool ein, insbesondere visueller, Hinweis ausgegeben werden, dass er als Teilnehmer ausgewählt wurde. Die zeitliche Limitierung des Zeitfensters zur Beantwortung des Fragenkataloges hat den Vorteil, dass gewünschte Informationen nahezu in Echtzeit erhoben werden können.

Insbesondere können dem Auftraggeber in Abhängigkeit von den Auswahlkriterien die anonymisierten zur Dokumentation und/oder Planung eingegebenen Prozessparameter zur Auswahl angezeigt werden. Der Auftraggeber erhält somit einen anonymisierten Zugriff auf die Dokumentation und/oder Planung sowie die damit verbundenen, hinterlegten Prozessparameter, um hieraus weitere Auswahlkriterien ableiten und/oder bestehende Auswahlkriterien modifizieren zu können, insbesondere durch die Auswahl und/oder Variation von Prozessparametern.

Des Weiteren kann das Analysetool externe Parameter einer Vielzahl von Benutzern und die Auswahlkriterien und/oder Filterkriterien auf eine Übereinstimmung überprüfen, vorzugsweise kann durch das Analysetool, insbesondere nur, bei Vorliegen einer Übereinstimmung zwischen den externen Parametern und den Auswahlkriterien und/oder den Filterkriterien mit dem entsprechenden Eingabetool zur Durchführung einer Vergleichsroutine datentechnisch verknüpft werden, und/oder, kann durch das Analysetool, insbesondere nur, bei Vorliegen einer Übereinstimmung zwischen den Auswahlkriterien und/oder Filterkriterien des Fragenkatalogs und den externen Parametern die Vergleichsroutine durchgeführt werden. Externe Parameter können die Benutzer der Serverplattform betreffende Informationen sein, die auf der Serverplattform nicht verfügbar sind.

Hierzu kann die Serverplattform die externen Parameter aus einer externen Datenquelle empfangen, und/oder, dass die externen Parameter Lokalisationsdaten, insbesondere GPS-Daten, und/oder Wetterdaten und/oder Kartierungsdaten umfassen.

Weiterhin kann von dem Empfangstool zur Eingabe des Fragenkataloges eine maximale Anzahl von, insbesondere frei formulierter, Fragen vorgegeben werden. Die Beschränkung der Anzahl der Fragen kann bewirken, dass die Präzision der Formulierung der Fragen gesteigert wird. Insbesondere kann durch das Empfangstool die Anzahl der Fragen des Fragenkataloges auf unter zehn Fragen, besonders bevorzugt auf bis zu fünf Fragen, beschränkt werden.

Gemäß einer bevorzugten Weiterbildung kann der Fragenkatalog in Abhängigkeit von den zur Dokumentation und/oder Planung eingegebenen Prozessparametern und/oder dem Befragungsverlauf adaptiert werden. Hierdurch kann dem Auftraggeber im Verlauf einer Befragung die Möglichkeit eröffnet werden, den eingegebenen Fragenkatalog bei Bedarf anzupassen und zu aktualisieren. Somit kann der aktualisierte Fragenkatalog den ausgewählten Benutzern zur Verfügung gestellt werden, die an den Fragenkatalog bis dahin unbeantwortet gelassen haben. Denkbar ist aber auch, dass die Benutzer, die den ursprünglichen Fragenkatalog bereits beantwortet hatten, auf den geänderten und aktualisierten Fragenkatalog hingewiesen werden, um deren erneute Teilnahme zu ermöglichen.

Bevorzugt kann die Serverplattform Antworten von teilnehmenden Benutzern dem Auftraggeber, vorzugsweise aggregiert, zur Verfügung stellen.

Insbesondere können die teilnehmenden Benutzer mittels eines automatischen Bonussystems der Serverplattform für das zumindest teilweise Beantworten des Fragenkatalogs belohnt werden. Hierdurch kann ein Anreiz geschaffen werden, als ein ausgewählter Benutzer an der Beantwortung des Fragenkatalogs teilzunehmen.

Nach einer weiteren Lehre gemäß dem Anspruch 14, der eigenständige Bedeutung zukommt, wird eine Serverplattform als solche zur Verwendung in einem vorschlagsgemäßen Verfahren beansprucht. Auf alle Ausführungen zu dem vorschlagsgemäßen Verfahren darf verwiesen werden.

Die vorliegende Erfindung wird nachstehend anhand eines in den Zeichnungen dargestellten Ausführungsbeispieles näher erläutert.

Es zeigen:
- Fig. 1: schematisch eine Serverplattform zur Verwendung in einem Verfahren zum prozessbezogenen Generieren landwirtschaftlicher Daten; und
- Fig. 2: ein schematisches Ablaufdiagramm des vorschlagsgemäßen Verfahrens.

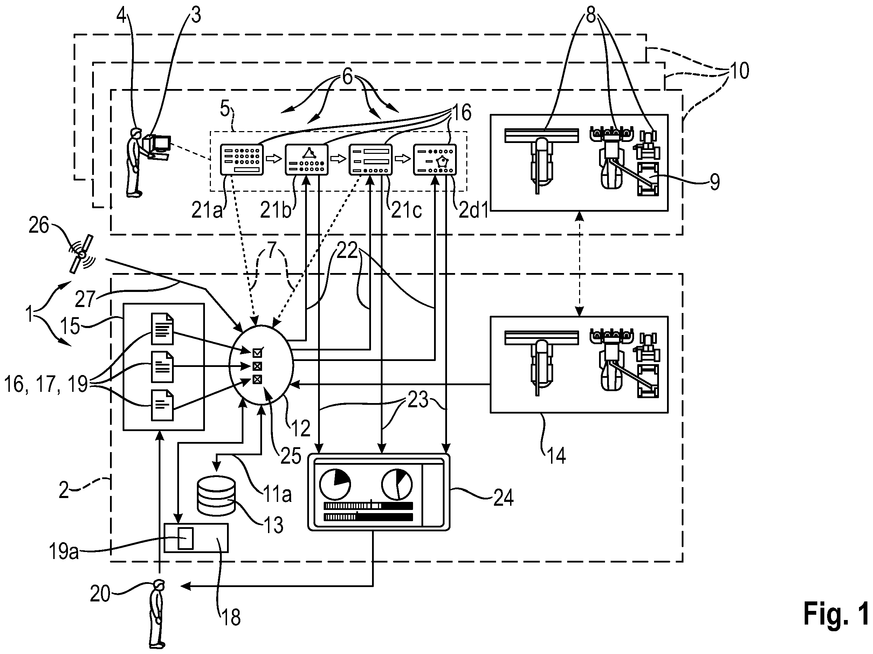

Fig. 1 zeigt schematisch eine Serverplattform 1 zur Verwendung in einem Verfahren zum prozessbezogenen Generieren landwirtschaftlicher Daten. Der Begriff "prozessbezogen" meint, dass die generierten Daten einen direkten Bezug zu einem landwirtschaftlichen Prozess aufweisen. Derartige Prozesse können ganz unterschiedliche landwirtschaftliche Arbeiten betreffen. Landwirtschaftliche Prozesse können ganz allgemein eine Tierhaltung oder eine Feldbewirtschaftung, jedoch auch sehr speziell das Füttern eines spezifischen Tieres oder das Ernten einer spezifischen Pflanze betreffen sowie den Einsatz einer spezifischen landwirtschaftlichen Arbeitsmaschine 8 und/oder eines spezifischen landwirtschaftlichen Arbeitsaggregates 9.

Der Begriff "Generieren" umfasst zumindest das Erheben, Sammeln und die Verarbeitung der Daten. Die Serverplattform 1 kann einen oder mehrere Server und ein Computerprogramm umfassen und muss nicht zwingend auf einen Ort beschränkt sein. Mindestens umfasst die Serverplattform 1 eine Hardwarekomponente 2, die ein Computerprogramm ausführt. Grundsätzlich kann vorgesehen sein, dass die Serverplattform 1 einen Computer 3 und/oder ein mobiles Gerät eines Benutzers 4 umfasst. So kann beispielsweise ein Teil eines Computerprogramms der Serverplattform 1 auf dem Computer 3 installiert sein. Prinzipiell ist auch eine dezentrale Ausführungsform der Serverplattform 1 denkbar. Zur Kommunikation mit dem Benutzer 4 umfasst die Serverplattform 1 zumindest ein Eingabegerät und ein Ausgabegerät, hier den Computer 3 oder ein mobiles Gerät des Benutzers 4, oder steht mit diesen, zumindest zeitweise, in Verbindung. Mit 10 sind mehrere landwirtschaftliche Betriebe bezeichnet, die mit der Serverplattform 1 in vorstehend ausgeführter Weise in Verbindung stehen können.

Die Serverplattform 1 weist ein Eingabetool 5 auf, über das der Benutzer 4 eine prozessbezogene landwirtschaftliche Eingaberoutine 6 durchführt. Die Eingaberoutine 6 kann eine Dokumentationsroutine zur Dokumentation eines landwirtschaftlichen Prozesses oder eine Planungsroutine zur Planung eines landwirtschaftlichen Prozesses sein. In der Dokumentationsroutine kann der Benutzer 4 beispielsweise dokumentieren, welchen Dünger er auf welchem Feld ausgebracht oder welchen Ertrag der Benutzer 4 mit welcher Arbeitsmaschine 8 auf welchem Schlag eingebracht hat. In der Planungsroutine kann der Benutzer 4 diese Ausbringung beispielsweise vorher, zum Beispiel in Abhängigkeit des vorhandenen Düngers sowie der verfügbaren Arbeitsmaschine 8 und/oder dem verfügbaren Arbeitsaggregat 9, planen.

Grundsätzlich kann die Eingaberoutine 6 auch in einen anwendungsgetriebenen landwirtschaftlichen Prozess integriert sein und daher Eingaben während der Abarbeitung eines landwirtschaftlichen Prozesses beispielsweise durch eine Arbeitsmaschine 8 betreffen. Die Dokumentation durch die Eingaberoutine 6 kann beispielsweise im Rahmen einer Ertragskartierung oder der Erfassung eines Ressourcenverbrauchs während des Einsatzes der Arbeitsmaschine 8 durchgeführt werden. Zur Geodokumentation kann beispielsweise auf Positionsortungssignale oder und/oder Kartenmaterial zurückgegriffen werden.

Der Benutzer 4 gibt in der Eingaberoutine 6 der Serverplattform 1 landwirtschaftliche Prozessparameter 7 vor, die dann hier mindestens teilweise an ein Analysetool 12 weitergegeben werden. Bei diesen Prozessparametern 7 handelt es sich um diverse prozessbezogene Daten, die der Dokumentation von durchgeführten landwirtschaftlichen Prozesses dienen, die wiederum Teil einer späteren Planung eines landwirtschaftlichen Prozesses sein können. Die Prozessparameter 7 lassen sich in der Regel messtechnisch erfassen. Die messtechnische Erfassung von Prozessparametern 7 umfasst die quantitative und/oder qualitative Erfassung. Ebenso von der messtechnischen Erfassung umfasst ist eine zeitreferenzierte und/oder georeferenzierte Erfassung der Prozessparameter 7.
Das Analysetool 12 anonymisiert die eingegebenen Prozessparameter 7 und hinterlegt diese als anonymisierte Prozessparameter 11a abrufbar in einer Datenbank 13. Die Serverplattform 1 umfasst zumindest eine weitere Datenbank 14, in welcher Benutzerdaten benutzerspezifisch hinterlegt sind.

Die Serverplattform 1 weist ein Empfangstool 15 zur Eingabe eines landwirtschaftlichen Fragenkatalogs 16 mit diesem zugeordneten Auswahlkriterien 17 durch einen Auftraggeber 20 auf. Der Auftraggeber 20 kann ein Hersteller oder Lieferant von zur Unterstützung und/oder zur Durchführung landwirtschaftlicher Prozesse erforderlicher Ressourcen sein. Der landwirtschaftliche Fragenkatalog 16 soll an gezielt auszuwählende Benutzer 4 der Serverplattform 1 gerichtet werden. Hierzu wählt die Serverplattform 1 mittels des Analysetools 12 in Abhängigkeit von den Auswahlkriterien 17 und von in einem Datenspeicher 18 der Serverplattform 1 hinterlegbaren Filterkriterien 19 die Benutzer 4 automatisch aus, an die der landwirtschaftliche Fragenkatalog 16 übermittelt wird. Einzelne Filterkriterien 19 können von dem Auftraggeber 20 aus einem bereits vorhandenen Bestand in dem Datenspeicher 18 ausgewählt und/oder neu eingegeben und hinterlegt werden. Die Serverplattform 1 gibt mittels des Eingabetools 5 den zuvor ausgewählten Benutzern 4 zumindest eine Frage 22 des Fragenkatalogs 16 in der Eingaberoutine 6 zur Beantwortung vor.

Insbesondere können die Prozessparameter 7 und die Auswahlkriterien 17 und/oder die Filterkriterien 19 in einer Vergleichsroutine 25 auf eine Übereinstimmung überprüft werden. Die Vergleichsroutine 25 kann vorzugsweise durch das Analysetool 12 vorgenommen werden. Dadurch kann die Genauigkeit der Auswahl eines Benutzers 4 erhöht werden. Diese Übereinstimmung kann auf unterschiedliche Art und Weise definiert sein. Es kann beispielsweise eine prozentuale Übereinstimmung zwischen den Auswahlkriterien 17 und/oder die Filterkriterien 19 einerseits und den Prozessparametern 7 andererseits ausreichen, es kann jedoch auch vorgesehen sein, dass gewisse Auswahlkriterien 17 und/oder die Filterkriterien 19 zwingend erfüllt sein müssen. Es kann auch vorgesehen sein, dass ein Grad der Übereinstimmung ermittelt wird, der in die Auswahl mit einfließt.

Von den Benutzern 4 eingegebene Antworten 23 werden mittels eines Ausgabetools 24 dem Auftraggeber 20 zur Verfügung gestellt. Dabei stellt die Serverplattform 1 die Antworten 23 einer Vielzahl von Benutzern 4 dem Auftraggeber 20 aggregiert zur Verfügung. Das Ausgabetool 24 kann einen Computer und/oder ein mobiles Gerät des Auftraggebers 20 umfassen.

Die Abarbeitung des Fragenkatalogs 16 erfolgt vorzugsweise über mehrere Eingabeschritte 21a, 21b, 21c, 21d. Die Anzahl der Eingabeschritte 21a, 21b, 21c, 21d orientiert sich an dem Umfang des Fragenkatalogs 16. Dabei kann von dem Empfangstool 15 zur Eingabe des Fragenkataloges 16 eine maximale Anzahl von, insbesondere frei formulierten, Fragen 22 vorgegeben werden. Die Beschränkung der Anzahl der Fragen 22 kann bewirken, dass die Präzision der Formulierung der Fragen 22 gesteigert wird. Insbesondere kann durch das Empfangstool 15 die Anzahl der Fragen 22 des Fragenkataloges 16 auf unter zehn Fragen, besonders bevorzugt auf bis zu fünf Fragen, beschränkt werden.

Insbesondere kann die Serverplattform 1 zusätzlich externe Parameter 27 aus einer externen Datenquelle 26 empfangen. Die externe Datenquelle 26 ist vorzugsweise extern zu allen Benutzern 4 und der Serverplattform 1. Die externe Datenquelle 26 kann beispielsweise ein Wettersatellit sein. Hier und vorzugsweise umfassen die externen Parameter 27 Lokalisationsdaten, insbesondere GPS-Daten, und/oder Wetterdaten und/oder Kartierungsdaten. Die externen Daten 27 können von dem Analysetool 12 bei der Ausführung der Vergleichsroutine 25 bei der automatischen Auswahl der zur Befragung vorgesehenen Benutzer 4 mit berücksichtig werden.

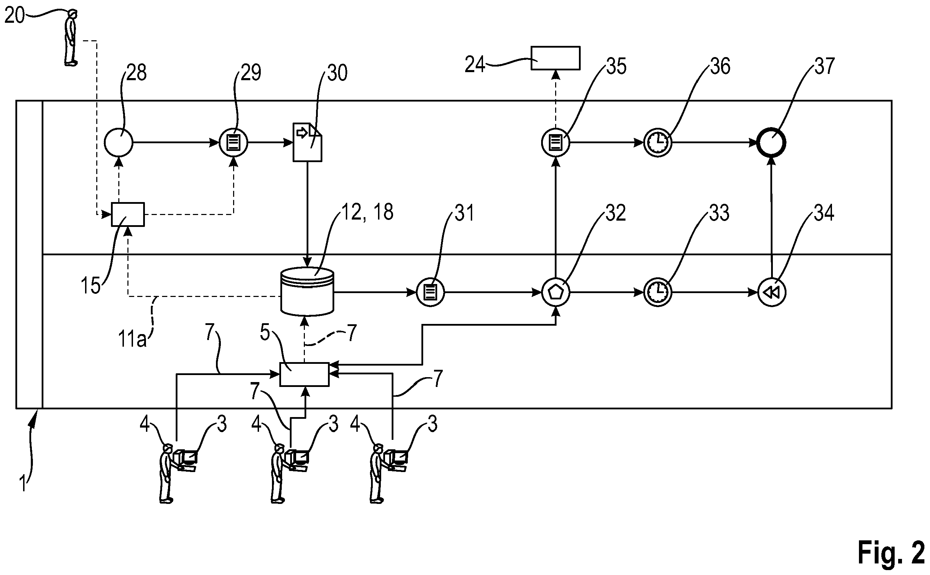

In Fig. 2 ist ein schematisches Ablaufdiagramm des vorschlagsgemäßen Verfahrens dargestellt, anhand dessen die Verfahrensabläufe und das Zusammenwirken der Komponenten der Serverplattform 1 weiter erläutert werden. Die Serverplattform 1 führt den Auftraggeber 20 einer Befragung mit einer Vielzahl von durch das vorschlagsgemäße Verfahren automatisiert auswählbaren Benutzern 4 zusammen.

In einem ersten Schritt 28 erfolgt die Identifikation des Aufraggebers 20, der einen Fragenkatalog 16 mit zumindest einer Frage 22 beauftragen will. Den Fragenkatalog 16 übermittelt der Auftraggeber 20 mittels des Empfangstools 15 an die Serverplattform 1.

Im zweiten Schritt 29 werden die dem Fragenkatalog 16 zugeordneten Auswahlkriterien 17 und/oder die Filterkriterien 19 mittels des Empfangstools 15 eingegeben. Die Eingabe des Fragenkataloges 16, der Auswahlkriterien 17 und/oder der Filterkriterien 19 kann sowohl frei formuliert erfolgen und/oder durch einen Rückgriff auf bereits in der Vergangenheit vorformulierte und hinterlegte Fragen 22 eines Fragenkataloges 16, von Auswahlkriterien 17 und/oder von Filterkriterien 19 erfolgen. Hierzu kann dem Auftraggeber 20 zur Zusammenstellung von Fragenkatalog 16, Auswahlkriterien 17 und/oder Filterkriterien 19 eine Auswahlmaske durch das Empfangstool 15 bereitgestellt werden. Zusätzlich oder alternativ können dem Auftraggeber 20 in Abhängigkeit von den Auswahlkriterien 17 die zur Dokumentation und/oder Planung eingegebenen anonymisierten Prozessparameter 11a zur Auswahl angezeigt werden. Der Auftraggeber 20 erhält somit einen anonymisierten Zugriff auf die Dokumentation und/oder Planung sowie die damit verbundenen, hinterlegten Prozessparameter 7, um hieraus weitere Auswahlkriterien 17 ableiten und/oder bestehende Auswahlkriterien 17 modifizieren zu können, insbesondere durch die Auswahl und/oder Variation von anonymisierten Prozessparametern 11a.

Im Schritt 30 werden der Fragenkatalog 16, die diesem zugeordneten Auswahlkriterien 17 und/oder die Filterkriterien 19 an das Analysetool 12 und den Datenspeicher 18 übermittelt.

Im Schritt 31 erfolgt die systemgenerierte Auswahl von Benutzern 4 durch das Analysetool 12. Die automatische Auswahl erfolgt dabei anhand der anonymisierten Prozessparameter 11a, der Auswahlkriterien 17 und/oder der Filterkriterien 19. Hierzu werden die anonymisierten Prozessparameter 11a und die Auswahlkriterien 17 und/oder die Filterkriterien 19 in der Vergleichsroutine 25 auf eine Übereinstimmung überprüft.

Bevorzugt können die Prozessparameter 7 bzw. die anonymisierten Prozessparameter 11a und/oder die Auswahlkriterien 17 die Nutzung sowie den Einsatzort landwirtschaftlicher Ressourcen, wie einer landwirtschaftlichen Arbeitsmaschine 8 und/oder eines landwirtschaftlichen Arbeitsaggregates 9 und/oder die Nutzung, insbesondere den Verbrauch, eines landwirtschaftlichen Arbeitsmittels, insbesondere eines Düngemittels und/oder eines Pflanzenschutzmittels und/oder eines Futtermittels und/oder eines Saatguts, oder eines Betriebsmittels betreffen. So können Prozessparameter 7 von eingesetzten Arbeitsmaschinen 8 und/oder Arbeitsaggregaten 9 mittels der Eingaberoutine 6 erfasst werden. Die Erfassung kann manuell durch eine Eingabe durch den Benutzer 4 oder automatisch mittels geeigneter Sensorvorrichtungen der eingesetzten Arbeitsmaschine 8 und/oder des Arbeitsaggregates 9 erfolgen. Prozessparameter 7 können beispielsweise Art und Hersteller der eingesetzten Arbeitsmaschine 8 und/oder des Arbeitsaggregates 9 sein, der Verbrauch an Betriebsmitteln und/oder Hilfsmitteln, Einsatzdauer und Einsatzort und dergleichen mehr. Insbesondere Verbrauchsdaten sowie Lokalisationsdaten lassen sich vorzugsweise durch die eingesetzte Arbeitsmaschine 8 und/oder das Arbeitsaggregates 9 mittels geeigneter Sensorvorrichtungen automatisiert bestimmen. Diese können durch eine Steuerungsvorrichtung der eingesetzten Arbeitsmaschine 8 und/oder des Arbeitsaggregates automatisch 9 an die Serverplattform 1 zur Verarbeitung durch die Dokumentationsroutine respektive Eingaberoutine 6 übermittelt werden.

Des Weiteren können in dem Datenspeicher 18 hinterlegbare Filterkriterien 19 aus benutzerspezifischen Informationen abgeleitet werden, die durch das Analysetool 12 aus Quantität und/oder Qualität und/oder der zeitlichen Nähe der Eingabe von Prozessparametern 7 zur Dokumentation und/oder Planung bestimmt werden. Filterkriterien 19 können insbesondere spezifische Eigenschaften der Benutzer 4 betreffen, die von den Auswahlkriterien 17 abweichen bzw. unabhängig sind. Diese spezifischen Eigenschaften der Benutzer 4 sind auf der Serverplattform 1 anonymisiert hinterlegt.

So können in dem Datenspeicher 18 hinterlegbare Filterkriterien 19 aus einer in dem Datenspeicher 18 und/oder der Datenbank 13, 14 hinterlegten Befragungshistorie 19a der die Serverplattform 1 verwendenden Benutzer 4 abgeleitet werden. Dabei kann die hinterlegte benutzerspezifische Befragungshistorie 19a Informationen über die Häufigkeit von in der Vergangenheit durchgeführten Befragungen, den zeitlichen Abstand zwischen einzelnen durchgeführten Befragungen, die Neigung der Benutzer 4 an einer Befragung teilzunehmen und dergleichen mehr enthalten. Des Weiteren kann die Befragungshistorie 19a als Filterkriterien 19 verwendbare Qualitätskriterien umfassen. Hierbei können die als Filterkriterien 19 verwendbaren Qualitätskriterien die Vollständigkeit sowie die zeitliche Nähe der Dokumentation von landwirtschaftlichen Prozessen durch den jeweiligen Benutzer 4 sein. Weiterhin können Qualitätskriterien der Umfang und die zeitliche Nähe bei der Eingabe von Prozessparametern 7 zur Planung landwirtschaftlicher Prozesse sein.

Im nachfolgenden Schritt 32 gibt die Serverplattform 1 mittels des Eingabetools 5 den im Schritt 31 automatisch ausgewählten Benutzern 4 zumindest eine Frage 22 des Fragenkatalogs 16 in der Eingaberoutine 6 zur Beantwortung vor.
Zusätzlich wird im Schritt 33 durch die Serverplattform 1 mittels des Eingabetools 5 ein zur Verfügung stehendes Zeitfenster zur Beantwortung des Fragenkataloges 16 in der Eingaberoutine 6 vorgeben und signalisieren. Den automatisch ausgewählten Benutzern 4 kann auf dieser Weise eine Dringlichkeit der Beantwortung suggeriert werden, um Einfluss auf den Entscheidungsprozess des jeweiligen ausgewählten Benutzers zu nehmen, die Beantwortung, insbesondere zeitnah, vorzunehmen. Dabei kann dem jeweils automatisch ausgewählten Benutzer 4 durch das Eingabetool 5 ein, insbesondere visueller, Hinweis ausgegeben werden, dass er als Teilnehmer an der Befragung ausgewählt wurde. Die zeitliche Limitierung des Zeitfensters zur Beantwortung des Fragenkataloges 16 hat den Vorteil, dass gewünschte Informationen nahezu in Echtzeit erhoben werden können.

Im Schritt 34 kann durch das Analysetool 12 der Umfang der Teilnahme, d.h. die Anzahl der beantworteten Fragen 22, der automatisch ausgewählten Benutzer 4 anhand der Antworten 23 ausgewertet werden. Insbesondere können die teilnehmenden Benutzer 4 mittels eines automatischen Bonussystems der Serverplattform 1 für das zumindest teilweise Beantworten des Fragenkatalogs 16 belohnt werden. Hierdurch kann ein Anreiz für eine erhöhte Bereitschaft geschaffen werden, als ein ausgewählter Benutzer 4 an der Beantwortung des Fragenkatalogs 16 teilzunehmen.

Im Schritt 35, der im Wesentlichen zeitgleich mit dem Schritt 32 ausgeführt wird, erhält der Auftraggeber 20 in Echtzeit Zugriff auf den Verlauf der Befragung und die eingehenden Befragungsergebnisse. Hier und vorzugsweise kann der Fragenkatalog 16 in Abhängigkeit von den zur Dokumentation und/oder Planung eingegebenen und anonymisierten Prozessparameter 11a und/oder dem Befragungsverlauf adaptiert werden. Hierdurch kann dem Auftraggeber 20 im Verlauf einer Befragung die Möglichkeit eröffnet werden, den eingegebenen Fragenkatalog 16 bei Bedarf anzupassen und zu aktualisieren. Somit kann ein aktualisierter Fragenkatalog den ausgewählten Benutzern 4 zur Verfügung gestellt werden, die den bisherigen Fragenkatalog 16 bis dahin unbeantwortet gelassen haben. Denkbar ist aber auch, dass die Benutzer 4, die den ursprünglichen Fragenkatalog 16 bereits beantwortet hatten, auf den geänderten und aktualisierten Fragenkatalog hingewiesen werden, um deren erneute Teilnahme zu ermöglichen. Eine Zugriffsdauer 36 auf den Fragenkatalog 16, innerhalb der dessen Adaption durch den Auftraggeber 20 möglich ist, ist vorzugsweise zeitlich limitiert.

Hier und vorzugsweise überprüft das Analysetool 12 mittels der Vergleichsroutine 25 die eingegebenen Prozessparameter 7 des ersten Eingabeschritts 21a und die Auswahlkriterien 17 auf eine Übereinstimmung und gibt den ausgewählten Benutzern 4 die ausgewählte oder generierte Frage 22 des Fragenkatalogs 16 in dem zweiten Eingabeschritt 21b zur Beantwortung vor. Durch die schrittweise Beantwortung des Fragenkatalogs 16 erhält das Empfangstool 5 die Prozessparameter 7 ebenfalls schrittweise und kann daher auf einfache Art und Weise noch während der Eingaberoutine 6 den ausgewählten Benutzern 4 die Frage 22 vorgeben.

Im Schritt 37 endet das vorschlagsgemäße Verfahren, nachdem die teilnehmenden Benutzer 4 durch das Bonussystem ihren entsprechenden Incentive erhalten haben sowie der Auftraggeber 20 das abschließende Ergebnis der Befragung erhalten hat.

**Bezugszeichenliste**

| | | | |
|---|---|---|---|
| 1 | Serverplattform | 30 | Schritt |
| 2 | Hardwarekomponente | 31 | Schritt |
| 3 | Computer | 32 | Schritt |
| 4 | Benutzer | 33 | Schritt |
| 5 | Eingabetool | 34 | Schritt |
| 6 | Eingaberoutine | 35 | Schritt |
| 7 | Prozessparameter | 36 | Zugriffsdauer |
| 8 | Arbeitsmaschine | 37 | Schritt |
| 9 | Arbeitsaggregat | | |
| 10 | Landwirtschaftlicher Betrieb | | |
| 11a | Anonymisierter Prozessparameter | | |
| 12 | Analysetool | | |
| 13 | Datenbank | | |
| 14 | Datenbank | | |
| 15 | Empfangstool | | |
| 16 | Fragenkatalog | | |
| 17 | Auswahlkriterien | | |
| 18 | Datenspeicher | | |
| 19 | Filterkriterien | | |
| 19a | Befragungshistorie | | |
| 20 | Auftraggeber | | |
| 21a | Eingabeschritt | | |
| 21b | Eingabeschritt | | |
| 21c | Eingabeschritt | | |
| 21d | Eingabeschritt | | |
| 22 | Frage | | |
| 23 | Antwort | | |
| 24 | Ausgabetool | | |
| 25 | Vergleichsroutine | | |
| 26 | Externe Datenquelle | | |
| 27 | Externe Daten | | |
| 28 | Schritt | | |
| 29 | Schritt | | |

## Patentansprüche

1. Verfahren zum Generieren von auf einen landwirtschaftlichen Prozess bezogenen Daten mittels einer Serverplattform (1),
wobei die Serverplattform (1) ein Eingabetool (5) aufweist, durch welches Benutzer (4) eine prozessbezogene landwirtschaftliche Eingaberoutine (6) zur Eingabe von Prozessparametern (7) zur Dokumentation und/oder Planung durchführen,
wobei die Serverplattform (1) mittels eines Analysetools (12) die eingegebenen Prozessparameter (7) anonymisiert und als anonymisierte Prozessparameter (11a) in einer Datenbank (13) abrufbar hinterlegt,
wobei die Serverplattform (1) ein Empfangstool (15) zur Eingabe eines landwirtschaftlichen Fragenkatalogs (16) mit diesem zugeordneten Auswahlkriterien (17) durch einen Auftraggeber (20) aufweist, wobei der landwirtschaftliche Fragenkatalog (16) an auszuwählende Benutzer (4) der Serverplattform (1) gerichtet wird,
wobei die Serverplattform (1) mittels des Analysetools (12) in Abhängigkeit von den Auswahlkriterien (17) und von in einem Datenspeicher (18) der Serverplattform (1) hinterlegbaren Filterkriterien (19) die Benutzer (4) automatisch auswählt, an die der landwirtschaftliche Fragenkatalog (16) übermittelt wird,
wobei die Serverplattform (1) mittels des Eingabetools (5) den ausgewählten Benutzern (4) zumindest eine Frage (22) des Fragenkatalogs (16) in der Eingaberoutine (6) zur Beantwortung vorgibt.

2. Verfahren nach Anspruch 1, **dadurch gekennzeichnet, dass** die Prozessparameter (7) und die Auswahlkriterien (17) und/oder die Filterkriterien (19) in einer Vergleichsroutine (25) auf eine Übereinstimmung überprüft werden.

3. Verfahren nach Anspruch 1 oder 2, **dadurch gekennzeichnet, dass** die anonymisierten Prozessparameter (11a) und/oder die Auswahlkriterien (177) die Nutzung sowie den Einsatzort landwirtschaftlicher Ressourcen, wie einer landwirtschaftlichen Arbeitsmaschine (8) und/oder eines landwirtschaftlichen Arbeitsaggregates (9) und/oder die Nutzung, insbesondere den Verbrauch, eines landwirtschaftlichen Arbeitsmittels, insbesondere eines Düngemittels und/oder eines Pflanzenschutzmittels und/oder eines Futtermittels und/oder eines Saatguts, oder eines Betriebsmittels betreffen.

4. Verfahren nach einem der vorangehenden Ansprüche, **dadurch gekennzeichnet, dass** in dem Datenspeicher (18) hinterlegbare Filterkriterien (19) aus benutzerspezifischen Informationen abgeleitet werden, die durch das Analysetool (12) aus Quantität und Qualität und/oder der zeitlichen Nähe der Eingabe von Prozessparametern (7) zur Dokumentation und/oder Planung bestimmt werden.

5. Verfahren nach einem der vorangehenden Ansprüche, **dadurch gekennzeichnet, dass** in dem Datenspeicher (18) hinterlegbare Filterkriterien (19) aus einer in dem Datenspeicher (18) und/oder der Datenbank (13, 14) hinterlegten Befragungshistorie (19a) der die Serverplattform (1) verwendenden Benutzer (4) abgeleitet werden.

6. Verfahren nach einem der vorangehenden Ansprüche, **dadurch gekennzeichnet, dass** die Serverplattform (1) mittels des Eingabetools (5) ein zur Verfügung stehendes Zeitfenster zur Beantwortung der Fragen in der Eingaberoutine (6) vorgibt und signalisiert.

7. Verfahren nach einem der vorangehenden Ansprüche, **dadurch gekennzeichnet, dass** dem Auftraggeber (20) in Abhängigkeit von den Auswahlkriterien (17) die zur Dokumentation und/oder Planung eingegebenen anonymisierten Prozessparameter (11a) zur Auswahl angezeigt werden.

8. Verfahren nach einem der vorhergehenden Ansprüche, **dadurch gekennzeichnet, dass** das Analysetool (12) externe Parameter (27) einer Vielzahl von Benutzern (4) und die Auswahlkriterien (17) und/oder Filterkriterien (19) auf eine Übereinstimmung überprüft, vorzugsweise, dass das Analysetool (12), insbesondere nur, bei Vorliegen einer Übereinstimmung zwischen den externen Parametern (27) und den Auswahlkriterien (17) und/oder den Filterkriterien (19) mit dem entsprechenden Eingabetool (15) zur Durchführung einer Vergleichsroutine () datentechnisch verknüpft wird, und/oder, dass das Analysetool (12), insbesondere nur, bei Vorliegen einer Übereinstimmung zwischen den Auswahlkriterien (17) und/oder Filterkriterien (19) des Fragenkatalogs () und den externen Parametern (27) die Vergleichsroutine (25) durchführt.

9. Verfahren nach Anspruch 8, **dadurch gekennzeichnet, dass** die Serverplattform (2) die externen Parameter (27) aus einer externen Datenquelle (26) empfängt, und/oder, dass die externen Parameter (27) Lokalisationsdaten, insbesondere GPS-Daten, und/oder Wetterdaten und/oder Kartierungsdaten umfassen.

10. Verfahren nach einem der vorangehenden Ansprüche, **dadurch gekennzeichnet, dass** von dem Empfangstool (15) zur Eingabe des Fragenkataloges (16) eine maximale Anzahl von, insbesondere frei formulierten, Fragen (22) vorgegeben wird.

11. Verfahren nach einem der vorangehenden Ansprüche, **dadurch gekennzeichnet, dass** der Fragenkatalog (16) in Abhängigkeit von den zur Dokumentation und/oder Planung eingegebenen Prozessparameter (11a) und/oder dem Befragungsverlauf adaptiert wird.

12. Verfahren nach einem der vorangehenden Ansprüche, **dadurch gekennzeichnet, dass** die Serverplattform (1) Antworten (23) von teilnehmenden Benutzern (4) dem Auftraggeber (20), vorzugsweise aggregiert, zur Verfügung stellt.

13. Verfahren nach einem der vorangehenden Ansprüche, **dadurch gekennzeichnet, dass** die teilnehmenden Benutzer (4) mittels eines automatischen Bonussystems der Serverplattform (1) für das zumindest teilweise Beantworten des Fragenkatalogs (16) belohnt werden.

14. Serverplattform (1) ausgestaltet zur Verwendung in einem Verfahren nach einem der vorangehenden Ansprüche.
